# EUROPEAN PATENT SPECIFICATION

(11) **EP 4 159 419 B1**
(45) Date of publication and mention of the grant of the patent: **09.07.2025**
(21) Application number: 20938741.4
(22) Date of filing: 03.09.2020
(51) Int. Cl.: B29C 70/22, B29C 70/34, B29C 70/44, B64C 1/14, B64F 5/10, B29D 99/00, B29L 31/30

(54) **MANUFACTURING METHOD FOR AIRCRAFT BULKHEAD**
HERSTELLUNGSVERFAHREN FÜR EINE FLUGZEUGTRENNWAND
PROCÉDÉ DE FABRICATION D'UNE CLOISON D'AÉRONEF

(30) Priority: 03.06.2020 CN 202010493518
(43) Date of publication of application: 05.04.2023
(73) Proprietor: Shanghai Aircraft Manufacturing Co., Ltd., Shanghai 201324 (CN)
(72) Inventor: SU, Jiazhi, Shanghai 201324 (CN); HAN, Xiaoyong, Shanghai 201324 (CN); WANG, Lin, Shanghai 201324 (CN); NING, Bo, Shanghai 201324 (CN); QIU, Chunliang, Shanghai 201324 (CN); CHEN, Ping, Shanghai 201324 (CN); LIU, Weiping, Shanghai 201324 (CN); YAN, Chao, Shanghai 201324 (CN); XIONG, Wenlei, Shanghai 201324 (CN); AN, Shenshen, Shanghai 201324 (CN); LI, Rupeng, Shanghai 201324 (CN); CHEN, Lei, Shanghai 201324 (CN)
(74) Representative: Canzler & Bergmeier Patentanwälte Partnerschaft mbB
(86) International application number: PCT/CN2020/113334
(87) International publication number: WO 2021/243867

(56) References cited:
- EP-A2- 2 203 288
- EP-B1- 2 203 288
- CN-A- 101 910 493
- CN-A- 103 569 347
- DE-A1- 102007 049 347
- DE-A1- 102008 028 865
- DE-A1- 102009 047 340
- JP-B2- 4 063 183
- US-B2- 7 014 806

## Description

### TECHNICAL FIELD

The present disclosure relates to airplane spares and molding process, in particular to a method of manufacturing an airplane frame.

### BACKGROUND

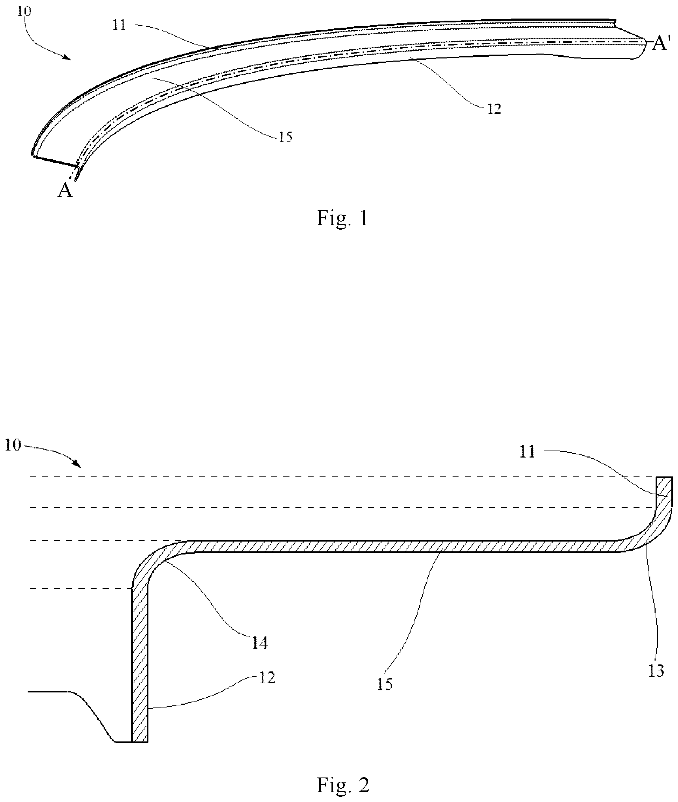

Usually, the interior of an airplane is separated into different areas by airplane frames. Different areas are used as passenger cabins, cargo cabins, etc. In order to match a streamlined profile of an airplane, the airplane frame typically has a mutually angled and arc-shaped configuration shown in Fig. 1. An annular frame formed by splicing together a plurality of arc-shaped airplane frames forms supporting components of individual separated areas.

Composite materials have the characteristics of light weight and high structural strength. Frames made of composite materials have become a dominant form of airplane frames. Generally, the airplane frame needs to go through the following steps: laying braided fiber prepreg on a mold with a shape corresponding to the airplane frame, pressurizing and reinforcing sealingly with a vacuum bag, and demolding.

In conjunction with Fig. 1, after laying the braided fiber prepreg on the corresponding mold, since the frame with arc-shaped configuration has different arc lengths at the positions corresponding to the inner arc and the outer arc, significant wrinkles will be produced at the curved positions after curvedly laying conventional fiber bodies, which will seriously affect the quality of the formed frame.

Boeing Company of the United States also disclosed a manufacturing process of using dry fiber braiding combined with RTM molding. According to this manufacturing process, airplane manufacturers need to keep braids on braiding mandrels, transport them to the assembly workshop, and then remove and assemble them. Therefore, this kind of manufacturing process requires manufacturers to purchase more braiding mandrels and results in higher transportation costs for transporting braiding mandrels.

WO 2009/037647 A2 describes a method for manufacturing a curved structural element made of composite material with a complex, open cross-section. The process involves preparing multiple flat components with layers of curved and straight fibers infused with resin, hot-forming these components, and assembling them on a shaped, inflatable device. The assembly is then subjected to a polymerization cycle in an autoclave, where the inflatable device applies pressure from inside the C-shaped component.

### SUMMARY

Directed to the above-mentioned shortcomings of the method of manufacturing an airplane frame according to the prior art, one of the objects of the present disclosure is to provide a method of manufacturing an airplane frame that is capable of effectively avoiding wrinkles formed in the fiber body laying process.

The object is achieved by way of the following form of manufacture of the present disclosure. The airplane frame has an arc-shaped structure and comprises a Z-shaped cross-section, and comprises flanged areas positioned at two side edges in the lateral direction, bent areas located adjacent to said flanged areas, and a web area extending between said bent areas, wherein said bent areas have an arc-shaped structure, and said web area is an annular sector in shape. Said method comprises the following steps:
braiding a first fiber body on a braiding mandrel according to the size of the airplane frame in an extension direction of said airplane frame to form a cylindrical braid;
developing said cylindrical braid to form a planar braid;
preimpregnating said planar braid with resin to form a prepreg;
cutting said prepreg according to the size of said airplane frame; and
laying and then curing the cut prepreg to form said airplane frame.

The present disclosure utilizes the characteristic that fibers are easy to curve following the shape, braides fibers along the extension direction of the arc-shaped structure of the airplane frame, and can effectively solve the problem that wrinkling problem occurring when curvedly laying an annular sector shaped web.

According to the invention, said web area is formed by using a biaxial braiding method.

According to the invention, any one of said two flanged areas is formed by using a triaxial braiding method.

According to a preferred embodiment of the present disclosure, one of said two bent areas is a first bent area formed by using a triaxial braiding method, and at least one second fiber body is continuously extended along the length direction of the frame in said first bent area. Preferably, the extending length of said second fiber body is not less than half of the extending length of said first bent area, in an extension direction of said first bent area. More preferably, the extending length of said second fiber body is equal to the extending length of said first bent area, in an extension direction of said first bent area. Providing second fiber bodies extending continuously in bent areas can ensure that the combined airplane frames of the present disclosure have a good tensile strength in the circumferential direction after joining the airplane frames of the present disclosure into an annular shape.

According to a preferred embodiment of the present disclosure, said first bent area is an inner bent area located at the inner position of the annular sector of said web area, and the flanged area locating at the inner position of the annular sector of said web area is formed by using a triaxial braiding method. By providing the first bent area and the flanged area formed by using a triaxial braiding method at the inner side of the web area, the first bent area and the flanged area have a smaller circumferential extending length (corresponding to the inner arc length of the annular sector shaped web area), which is beneficial to improving the tensile strength and compression strength of the first bent area and the flanged area. On the other hand, forming the first bent area and flanged area at the inner position of the web area formed by using a triaxial braiding method instead of a biaxial braiding method can further improve its tensile strength and compression strength.

According to a preferred embodiment of the present disclosure, after said prepreg is formed, an isolation paper is affixed to said prepreg, and the prepreg is separated from said braiding mandrel for winding collection. After performing a specific braiding method, the braid keeps fiber bodies on the braid in the desired extending direction without needing to be held by a braiding mandrel. On this basis, by separating the braid from the braiding mandrel after forming the prepreg by preimpregnating, the braiding mandrel can be kept in the braid manufacturing workshop and used continuously; and the braid prepreg wound as a roll is also easy to transport.

The present disclosure also relates to an airplane frame manufactured using any of the manufacturing methods described above.

The above preferred embodiments can be combined in any way to obtain each preferred example of the present disclosure, insofar as it is not contrary to common knowledge in the art.

As mentioned above, the present disclosure proposed an entirely new method of manufacturing a Z-shaped airplane frame, which utilizes braiding technology to solve problems in curved laying; and by manufacturing a braid into a prepreg using preimpregnating technology, problems in shape retaining transportation and subsequent glue injection process of three-dimensional dry fiber braids are avoided. In addition, according to the present disclosure, weaves fibers of 0° are simultaneously braided into a whole layer in the flanged areas, improving the mechanical properties of parts.

Other systems, methods, features and advantages of the present disclosure will be understood by those skilled in the art upon reading the following accompanying drawings and detailed descriptions. It is intended that all such additional systems, methods, features and advantages are included in this specification and in the contents of the present disclosure, and are included within the scope of the present disclosure and are protected by the appended claims.

### BRIEF DESCRIPTION OF THE DRAWINGS

For a better understanding of the above and other objects, features, advantages and functions of the present disclosure, reference may be made to preferred embodiments illustrated in the accompanying drawings. Throughout the drawings, identical reference numerals refer to identical parts. It will be understood by those skilled in the art that the accompanying drawings are intended to schematically illustrate preferred embodiments of the present disclosure without any limitation on the scope of the present disclosure and that the various parts of the drawings are not drawn to scale.
Fig. 1 is a schematic structural view of an airplane frame according to a preferred embodiment of the present disclosure;
Fig. 2 is a schematic cross-sectional view of the airplane frame of Fig. 1;
Fig. 3 is a schematic enlarged view of a partial surface of a braid forming an airplane frame;
Fig. 4 is a schematic cross-sectional view of a braid using triaxial braiding.

### Reference numerals:

10 airplane frame;
11 first flanged area;
12 second flanged area;
13 first bent area;
14 second bent area;
15 web area;
S1, S2 first fiber body;
S3 second fiber body.

### DETAILED DESCRIPTION

Next, the inventive concept of the present disclosure will be described in detail with reference to the accompanying drawings. What are described herein are merely preferred embodiments according to the present disclosure, on the basis of which those skilled in the art may contemplate other embodiments in which the present disclosure can be implemented, which also fall within the scope of the present disclosure. In the following specific description, directional terms such as "up", "down", "inside", "outside", "vertical", "lateral" and the like are used with reference to the directions illustrated in the accompanying drawings. The components of embodiments of the present disclosure may be placed in a number of different directions and the directional terms are used for illustrative purposes and are not limiting.

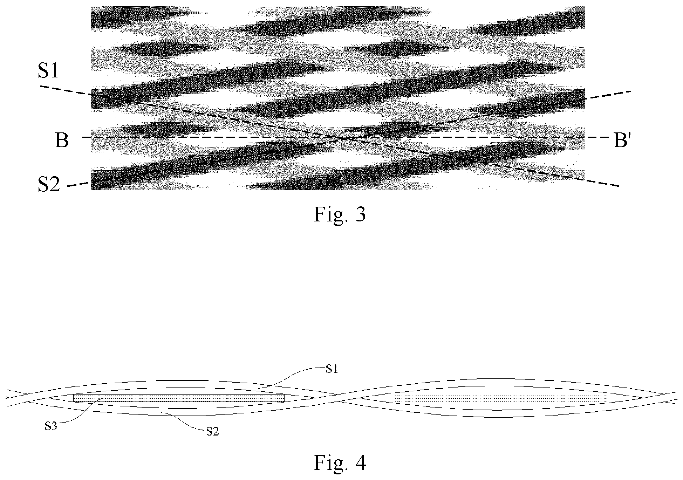

Fig. 1 shows a three-dimensional structure of an airplane frame 10. As shown in Fig. 1, an airplane frame 10 has an overall arc-shaped structure and includes flanged areas 11, 12 positioned at two side edges in the lateral direction (i.e. edge strip areas of the frame), bent areas 13, 14 next to the flanged areas 11, 12, and a web area 15 extending between the bent areas 13, 14. The bent areas 13 and 14 have an arc-shaped structure, and the web area 15 is an annular sector in shape. According to the airplane frame 10 of Fig. 1, the cross-section thereof is substantially a Z-shaped configuration as shown in Fig. 2. According to the present disclosure, the airplane frame 10 can be made by the following steps:
Step 1: braiding a first fiber body according to the size of the airplane frame in an extension direction of the airplane frame 10 to form a braid. In particular, reference is made to Fig. 3 which schematically illustrates a partial schematic enlarged view of the braid forming the airplane frame 10 of Fig. 1. In the braid formed by braiding in the above-described form, the extension direction of the connecting line BB' of a plurality of points of intersection of the fibers S1 extending in the first direction and the fibers S2 extending in the second direction is the same as the extension direction of each area of the airplane frame 10. For example, for the web area 15 and the bent areas 13, 14, the extension direction of the connecting line BB' in Fig. 3 is the same as the direction AA' in Fig. 1; and for the rest flanged areas 11, 12, the direction of the connecting line BB' is also the same as the extension direction of the corresponding flange. For an airplane frame 10 which has been formed into a three-dimensional structure, the flanged areas 11, 12 and the web area 15 and the bent areas 13, 14 are all extending in the A-A' direction shown in Fig. 1. It can be understood that when the airplane frame 10 in Fig. 1 is spread to the shape corresponding to the braiding mandrel, the extending directions of the flanged areas 11, 12 are different from those of the web area 15 and the bent areas 13, 14. Therefore, the braiding directions of the flanged areas 11, 12 are set to be different from the braiding directions of the web area 15 and the bent areas 13, 14 in the step of braiding the above-mentioned braid. It should be understood that for the fibers of the braid, the resulting braid which is braided through this step will not be wrinkled in the subsequent laying process.
   Typically, the braiding mandrel is a circular or square cylindrical structure, and the braid after being processed in Step 1 is a braid with a cylindrical structure.
Step 2: spreading the cylindrical braid formed in Step 1 to form a planar braid.
Step 3: preimpregnating the braid with resin to form a prepreg. The step of mixing resin in the planar braid can be carried out in the braiding mandrel.
Step 4: affixing an isolation paper to the prepreg, and separating the prepreg from said braiding mandrel for winding collection. In the planar braid which is braided through the above-mentioned Step 3, after the fiber bodies with different extending directions are subjected to the prepreg process, the fiber bodies do not need a braiding mandrel to maintain their shape to be maintained in the desired extending directions. On this basis, by separating the braid from the braiding mandrel after forming the prepreg by preimpregnating, the braiding mandrel can be kept in the braid manufacturing workshop and used continuously; and the braid prepreg wound as a roll is also easy to transport.
Step 4: spreading the roll-like prepreg and cutting the prepreg according to a shape corresponding to the spread airplane frame 10 to remove rough edges. According to the braid which is braided by the specific processes described above, an installation staff can identify the fiber extending direction on the braid. Using a drawing corresponding to the shape of the spread airplane frame 10, the installation staff can easily cut out the desired sheet-like prepreg.
Step 5: aligning fiber bodies to the corresponding positions of the airplane frame 10, accurately laying the above-mentioned cut prepreg, and then performing vacuum packaging to cure, thereby forming the airplane frame 10. In order to ensure the structural strength of the airplane frame 10, the laying steps described above should be repeated multiple times to form the airplane frame 10 having a multi-layer braid structure.

As can be seen from the above, the present disclosure utilizes the characteristic that fibers are easy to curve following the shape, braides fibers along the extension direction of the arc-shaped structure of the airplane frame 10, and can effectively solve the problem that the wrinkling problem occurring when curvedly laying an annular sector shaped web.

Referring further to Figs. 2 and 3, according to a preferred embodiment of the present disclosure, different braiding methods are employed in the web area 15, the bent areas 13, 14, and the flanged areas 11, 12. For example, in the example of Fig. 2, the web area 15, the first flanged area 11 with a smaller extending height, and the first bent area 13 interposed between the first flanged area 11 and the web area 15 may be formed by using biaxial braiding; and for the other bent area 14 (the second bent area 14) and the other flanged area 12 (the second flanged area 12) with a larger extending height, a triaxial braiding method may be employed.

Preferably, a second flanged area 12 with a greater extending height and formed by using triaxial braiding is provided on the inner side of the annular sector shaped web area with a smaller extending length, thereby forming an inner flanged area, i.e. an inner edge strip area. The second flanged area 12 is used as the main stress surface of an airplane frame. A second flanged area 12 provided on the inner side has a shorter extending length and has a more beneficial compression strength in the height direction than a second flanged area provided on the outer side of the annular sector shaped web area, i.e. corresponding to the position of the first flanged area 11.

Refer to Fig. 4 in conjunction with Fig. 1, in which a sectional view of a braid formed by using triaxial braiding is schematically shown. In the second bent area 14, at least one second fiber body S3 extends continuously in the length direction AA' of the frame in the bent areas 13, 14. Preferably, the extending length of the second fiber body S3 in the extending direction AA' of the bent areas 13, 14 is not less than half of the extending length of the bent areas 13, 14. More preferably, the extending length of the second fiber body is equal to the extending length of the bent areas 13, 14. Referring to Fig. 4, after a plurality of airplane frames 10 are combined to form an annular structure (corresponding to the annular structure inside an airplane), second flanged areas 12 (inner flanged areas) form an annular ring. Since each of the second flanged areas 12 is provided with continuously extending second fiber bodies S3, the group of annular airplane frames has better tensile strength and compression strength. In particular, for an airplane, the pressure inside the airplane cabin is much higher than the pressure outside the cabin, and according to the second fiber body described above, the airplane frame 10 is able to withstand the tensile force exerted on the inner side of the airplane frame due to the pressure difference.

The scope of protection of the present disclosure is only defined by the claims.

## Claims

1. A method of manufacturing an airplane frame (10), wherein said airplane frame (10) has an arc-shaped structure and comprises flanged areas (11, 12) positioned at two side edges in the lateral direction, bent areas (13, 14) located adjacent to said flanged areas (11, 12), and a web area (15) extending between said bent areas (13, 14), wherein said bent areas (13, (14) have an arc-shaped structure, and said web area (15) is an annular sector in shape, wherein said method comprises the steps of:
according to the size of the airplane frame (10), braiding a first fiber body (S1, S2) on a braiding mandrel in an extension direction of said airplane frame (10) to form a cylindrical braid;
developing said cylindrical braid to form a planar braid;
preimpregnating said planar braid with resin to form a prepreg;
cutting said prepreg according to the size of said airplane frame (10); and
laying and curing the cut prepreg to form said airplane frame (10),
**characterized in that**
said web area (15) is formed by using a biaxial braiding method, and **in that** any one of said two flanged areas (11, 12) is formed by using a triaxial braiding method.

2. The method according to claim 1, wherein one of said two bent areas (13, 14) is a first bent area (13) formed by formed by using a triaxial braiding method, and at least one second fiber body (S3) is continuously extended along the length direction of the frame in said first bent area (13).

3. The method according to claim 2, wherein the extending length of said second fiber body (S3) is not less than half of the extending length of said first bent area (13), in the extension direction of said first bent area (13).

4. The method according to claim 3, wherein the extending length of said second fiber body (S3) is equal to the extending length of said first bent area (13), in the extension direction of said first bent area (13).

5. The method according to claim 4, wherein said first bent area (13) is an inner bent area located at an inner position of the annular sector of said web area (15), and the flanged area located at the inner position of the annular sector of said web area (15) is formed by formed by using a triaxial braiding method.

6. The method according to any one of claims 1-5, wherein after said prepreg is formed, an isolation paper is affixed to said prepreg, and the prepreg is separated from said braiding mandrel for winding collection.

7. An airplane frame (10) manufactured by using the method according to any one of claims 1-6.

## Patentansprüche

1. Verfahren zum Herstellen eines Flugzeugrahmens (10), wobei der Flugzeugrahmen (10) eine bogenförmige Struktur aufweist und Flanschbereiche (11, 12), die an zwei Seitenkanten in der seitlichen Richtung positioniert sind, gebogene Bereiche (13, 14), die benachbart zu den Flanschbereichen (11, 12) angeordnet sind, und einen Stegbereich (15), der sich zwischen den gebogenen Bereichen (13, 14) erstreckt, umfasst, wobei die gebogenen Bereiche (13, 14) eine bogenförmige Struktur aufweisen und der Stegbereich (15) eine ringförmige Sektorform aufweist, wobei das Verfahren die folgenden Schritte umfasst:
gemäß der Größe des Flugzeugrahmens (10), Flechten eines ersten Faserkörpers (S1, S2) auf einem Flechtdorn in einer Erstreckungsrichtung des Flugzeugrahmens (10), um ein zylindrisches Geflecht zu bilden;
Entwickeln des zylindrischen Geflechts, um ein ebenes Geflecht zu bilden;
Vorimprägnieren des ebenen Geflechts mit Harz, um ein Prepreg zu bilden;
Schneiden des Prepregs gemäß der Größe des Flugzeugrahmens (10); und
Legen und Härten des geschnittenen Prepregs, um den Flugzeugrahmen (10) zu bilden,
**dadurch gekennzeichnet, dass** der Stegbereich (15) durch Verwenden eines biaxialen Flechtverfahrens gebildet wird, und
dass einer der zwei Flanschbereiche (11, 12) durch Verwenden eines triaxialen Flechtverfahrens gebildet wird.

2. Verfahren nach Anspruch 1, wobei einer der zwei gebogenen Bereiche (13, 14) ein erster gebogener Bereich (13) ist, der durch Bilden durch Verwenden eines triaxialen Flechtverfahrens gebildet wird, und mindestens ein zweiter Faserkörper (S3) kontinuierlich entlang der Längenrichtung des Rahmens in dem ersten gebogenen Bereich (13) erstreckt wird.

3. Verfahren nach Anspruch 2, wobei die Erstreckungslänge des zweiten Faserkörpers (S3) nicht weniger als die Hälfte der Erstreckungslänge des ersten gebogenen Bereichs (13) in der Erstreckungsrichtung des ersten gebogenen Bereichs (13) beträgt.

4. Verfahren nach Anspruch 3, wobei die Erstreckungslänge des zweiten Faserkörpers (S3) gleich der Erstreckungslänge des ersten gebogenen Bereichs (13) in der Erstreckungsrichtung des ersten gebogenen Bereichs (13) ist.

5. Verfahren nach Anspruch 4, wobei der erste gebogene Bereich (13) ein innerer gebogener Bereich ist, der an einer inneren Position des ringförmigen Sektors des Stegbereichs (15) angeordnet ist, und der Flanschbereich, der an der inneren Position des ringförmigen Sektors des Stegbereichs (15) angeordnet ist, durch Bilden durch Verwenden eines triaxialen Flechtverfahrens gebildet wird.

6. Verfahren nach einem der Ansprüche 1-5, wobei, nachdem das Prepreg gebildet ist, ein Isolierpapier an dem Prepreg befestigt wird und das Prepreg von dem Flechtdorn zum Wickeln getrennt wird.

7. Flugzeugrahmen (10), der durch Verwenden des Verfahrens nach einem der Ansprüche 1-6 hergestellt ist.

## Revendications

1. Procédé pour fabriquer un cadre d'avion (10), dans lequel ledit cadre d'avion (10) a une structure en forme d'arc et comprend des zones à brides (11, 12) positionnées au niveau de deux bords latéraux dans la direction latérale, des zones courbées (13, 14) situées de manière adjacente auxdites zones à brides (11, 12), et une zone d'âme (15) s'étendant entre lesdites zones courbées (13, 14), dans lequel lesdites zones courbées (13, 14) ont une structure en forme d'arc, et ladite zone d'âme (15) a une forme de secteur annulaire, dans lequel ledit procédé comprend les étapes consistant à :
selon la taille du cadre d'avion (10), tresser un premier corps de fibre (S1, S2) sur un mandrin à tresser dans une direction d'extension dudit cadre d'avion (10) pour former une tresse cylindrique ;
développer ladite tresse cylindrique pour former une tresse plane ;
pré-imprégner ladite tresse plane avec de la résine pour former un préimprégné ;
couper ledit préimprégné selon la taille dudit cadre d'avion (10) ; et
poser et durcir le préimprégné coupé pour former ledit cadre d'avion (10),
**caractérisé en ce que** ladite zone d'âme (15) est formée en utilisant un procédé à tresser biaxialement, et
**en ce que** l'une quelconque desdites deux zones à brides (11, 12) est formée en utilisant un procédé à tresser triaxialement.

2. Procédé selon la revendication 1, dans lequel l'une desdites deux zones courbées (13, 14) est une première zone courbée (13) formée en utilisant un procédé à tresser triaxialement, et au moins un second corps de fibre (S3) est étendu en continu le long de la direction de longueur du cadre dans ladite première zone courbée (13).

3. Procédé selon la revendication 2, dans lequel la longueur d'extension dudit second corps de fibre (S3) n'est pas inférieure à la moitié de la longueur d'extension de ladite première zone courbée (13), dans la direction d'extension de ladite première zone courbée (13).

4. Procédé selon la revendication 3, dans lequel la longueur d'extension dudit second corps de fibre (S3) est égale à la longueur d'extension de ladite première zone courbée (13), dans la direction d'extension de ladite première zone courbée (13).

5. Procédé selon la revendication 4, dans lequel ladite première zone courbée (13) est une zone courbée interne située au niveau d'une position interne du secteur annulaire de ladite zone d'âme (15), et la zone à bride située au niveau de la position interne du secteur annulaire de ladite zone d'âme (15) est formée en utilisant un procédé à tresser triaxialement.

6. Procédé selon l'une quelconque des revendications 1 à 5, dans lequel, après que ledit préimprégné est formé, un papier isolant est fixé audit préimprégné, et le préimprégné est séparé dudit mandrin à tresser pour la collecte d'enroulement.

7. Cadre d'avion (10) fabriqué en utilisant le procédé selon l'une quelconque des revendications 1 à 6.
